(19) **Europäisches Patentamt**
**European Patent Office**
**Office européen des brevets**

(11) **EP 4 567 538 B1**

(12) **EUROPEAN PATENT SPECIFICATION**

(45) Date of publication and mention
of the grant of the patent:
**01.07.2026 Bulletin 2026/27**

(51) International Patent Classification (IPC):
**G05D 1/00** (2024.01)      **G05D 1/686** (2024.01)

(52) Cooperative Patent Classification (CPC):
**G05D 1/686;** G05D 2109/20

(21) Application number: **23213909.7**

(22) Date of filing: **04.12.2023**

(54) **A COMPUTER-IMPLEMENTED METHOD FOR CONTROLLING A COMPANION VEHICLE ASSOCIATED WITH A MAIN VEHICLE AND SYSTEM THEREFOR**

COMPUTERIMPLEMENTIERTES VERFAHREN ZUR STEUERUNG EINES MIT EINEM HAUPTFAHRZEUG ASSOZIIERTEN BEGLEITFAHRZEUGS UND SYSTEM DAFÜR

PROCÉDÉ MIS EN ŒUVRE PAR ORDINATEUR POUR COMMANDER UN VÉHICULE COMPAGNON ASSOCIÉ À UN VÉHICULE PRINCIPAL ET SYSTÈME ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**11.06.2025 Bulletin 2025/24**

(73) Proprietor: **Airbus Defence and Space GmbH**
**82024 Taufkirchen (DE)**

(72) Inventors:
• **Acal, Antonio Perez**
**82024 Taufkirchen (DE)**
• **Ribas de Amaral, Janaina**
**82024 Taufkirchen (DE)**
• **Kirchner, Moritz**
**82024 Taufkirchen (DE)**
• **Katsilieris, Fotios**
**82024 Taufkirchen (DE)**

(74) Representative: **KASTEL Patentanwälte PartG mbB**
**St.-Cajetan-Straße 41**
**81669 München (DE)**

(56) References cited:
**CN-A- 111 885 504      US-A1- 2019 049 968**

• **WELLS JAMES Z ET AL: "Application of Interacting Multiple Model for Future State Prediction of Small Unmanned Aerial Systems", 2021 AMERICAN CONTROL CONFERENCE (ACC), AMERICAN AUTOMATIC CONTROL COUNCIL, 25 May 2021 (2021-05-25), pages 3755 - 3760, XP033945526, DOI: 10.23919/ ACC50511.2021.9482778**

**Description**

The invention relates to computer-implemented methods for predicting a kinematic state of an aerial vehicle and for controlling a group of aerial vehicles. The invention further relates to a system for carrying out the methods.

It is expected that the volume of Unmanned Aerial Vehicles (UAVs) will increase by more than 80% in the near future. Due to challenges in the approval process of UAVs, also Manned Aerial Vehicles (MAVs) are still a big topic in the aerospace industry.

Besides the integration of UAVs into the airspace, also the interaction between MAVs and UAVs is important for future applications. In particular, formation flying is getting more and more attention for its possibility to increase fuel efficiency. This so-called Manned-Unmanned Teaming (MUM-T) also expands the situation awareness of mission-based aviation, such as firefighting, and promises to improve the efficiency for such operations.

KR 101 774 313 B1 discloses an unmanned airplane flying ahead of an emergency vehicle.

US 2011 / 0 224 844 A1 discloses a method for automatically controlling a follower vehicle that is to follow a leader vehicle in a desired manner with respect to movement of the leader vehicle.

US 2015 / 0 158 513 A1 discloses an aerial camera system for identifying route-related hazards. The aerial camera system includes an aerial device disposed onboard a non-aerial vehicle as the non-aerial vehicle moves along a route. The aerial device also can be configured to fly above the route during movement of the vehicle along the route. The camera unit is configured to be disposed onboard the aerial device and to generate image data during flight of the aerial device. The one or more image analysis processors are configured to examine the image data and to identify a hazard disposed ahead of the non-aerial vehicle along a direction of travel of the non-aerial vehicle based on the image data. A method for identifying route-related hazards using image data obtained from a camera unit on an aerial device.

US 10 558 209 B1 discloses a system for controlling the flight of an aircraft. The system includes an aircraft operated by a human pilot, one or more optionally piloted aircraft controlled by a processor, and a communication link between the aircraft. The optionally piloted aircraft receives data indicative of the position and flight path of the piloted aircraft, and is automatically controlled to maintain a predetermined range of separation distances from the piloted aircraft. Control of the optionally piloted aircraft may include machine reasoning computing functions based on a classification of data received by the communication link, data indicative of the current positions and three-dimensional flight paths of the aircraft, stored data from previously calculated positions and three-dimensional flight paths of the aircraft, and stored data from previously executed flight plans associated with the optionally piloted aircraft.

CN 111 885 504 A discloses a method for optimizing the trajectory of an unmanned aerial vehicle assisting mobile vehicle wireless communication, comprising the steps: to maximize the flight energy efficiency of the UAV as the optimization goal, establish the UAV-assisted traveling vehicle communication system model and its corresponding mathematical optimization problem P1; obtain the current state information of the vehicle in the system model, and obtain the future movement trajectory of the vehicle through the vehicle trajectory prediction model according to the current state information of the vehicle; according to the future movement trajectory of the vehicle, the approximate processing of the optimization problem P1 is converted into a convex optimization problem, and the approximate convex optimization problem P2 of the optimization problem P1 is obtained; and solve the approximate convex optimization problem P2 to solve the optimization problem P1 of the UAV-assisted traveling vehicle communication system model, and then obtain the UAV flight trajectory and power when the UAV flight energy efficiency is maximized distribution.

US 2019 049968 A1 describes systems and methods for enhanced autonomous operations of a motorized mobile system. The method involves a processing system that uses sensors and object kinematic models to predict and continuously refine future kinematic states of an object.

The document WELLS JAMES Z ET AL: "Application of Interacting Multiple Model for Future State Prediction of Small Unmanned Aerial Systems", 2021 AMERICAN CONTROL CONFERENCE (ACC), AMERICAN AUTOMATIC CONTROL COUNCIL, 25 May 2021 (2021 -05-25), pages 3755-3760, describes an Interacting Multiple Model (IMM) system specifically designed to generate future position estimates for small Unmanned Aerial Systems (sUAS). The primary goal of this system is to enable the safe deployment and tracking of sUAS within national airspace. The IMM system, which operates on a ground control station, achieves this by combining the outputs of three different motion models, each implemented within its own Kalman filter. This iterative process allows the system to process sUAS positional information to predict their future kinematic states, including position, velocity, acceleration, and turn rate, and is capable of simultaneously tracking multiple sUAS while adapting to their observed movements.

It is the object of the invention to improve measures for operating a group of aerial vehicles.

The object is achieved by the subject-matter of the independent claims. Preferred embodiments are subject-matter of the dependent claims.

The invention provides a computer-implemented method for generating a control signal for controlling at least one companion vehicle of a main vehicle, the method comprising:

- a preprocessing unit determining input kinematic data from previously determined future kinematic data;

- a measuring unit determining current kinematic data that are indicative of a current kinematic state of the main vehicle at a current time step, wherein the current kinematic data are determined from sensor data obtained by at least one sensor of the main vehicle;
- a prediction unit receiving the input kinematic data and the current kinematic data, wherein the prediction unit comprises at least one Kalman-type filter unit each Kalman-type filter unit determining future kinematic data from the input kinematic data and the current kinematic data, wherein the future kinematic data are indicative of a kinematic state of the main vehicle at a next time step;
- a control unit generating a control signal based on the predicted future kinematic data, wherein the control signal is configured to cause each companion vehicle to move in a manner that maintains a predetermined position relative to the main vehicle within a predetermined tolerance.

The preprocessing unit can be initialized with some starting values as input kinematic data. The starting values can be random or based upon an initial calibration measurement.

The kinematic state of the main vehicle is typically defined by the main vehicle's position, velocity, heading, turn rate and/or acceleration. Not all these kinematic variables are necessary for defining the kinematic state. The position is generally given in a 2D coordinate system that can be imposed on a predetermined area of operation. The coordinate system can be geocentric, such that the position is typically given by latitude and longitude. In general, a 2D-position is used, as the third dimension is generally better handled by the control units to prevent, for example, crashes in case of aerial vehicles.

The velocity can be measured in a geocentric coordinate system, e.g., by a global navigation satellite system or with an inertial measuring unit. The velocity can also be measured using vehicle sensors, e.g. speedometers (together with heading), or other speed or velocity measuring devices.

Heading and turn rate can typically be measured by a compass, magnetometer or inertial measuring unit. Acceleration can be measured using an accelerometer.

The prediction unit uses a Kalman-type filter to predict future kinematic data of the main vehicle, preferably at least the position. The Kalman-type filter estimates the future kinematic data for the next time step as well as a covariance matrix from the input kinematic data. The estimate is then corrected by the current kinematic data that were measured by the measuring unit and results in the future kinematic data of the next time step.

The control unit receives the future kinematic data which indicate where the main vehicle is expected to be in the next time step. From this, the control unit determines a control signal for the companion vehicle. The control signal is determined such that the companion vehicle moves in a manner that ensures that the main vehicle and the companion vehicle maintain their relative position within a predetermined tolerance.

Preferably, the Kalman-type filter unit is selected from a group consisting of a Kalman filter unit, an extended Kalman filter unit, and an unscented Kalman filter unit. A simple Kalman filter can be used to implement the invention. This implementation is fast, reliable and useful. The simple Kalman filter is well known in the art and therefore not described in detail.

The functionality of a Kalman filter can be described in two steps. The first step is the prediction step. In this step, the previous prediction and previous covariance (both part of the input kinematic data) is used to predict a small time interval into the future. The time interval in the first step is set so that it corresponds to that of the measurements. In the second step, called the update step, the new prediction is compared with the measurement. In this step, also the error of the prediction (measurement residual) and the error covariance is calculated. To calculate now the updated state estimate and the state covariance, the Kalman gain is build out of the state and error covariance matrices.

It should be noted that the prediction and update steps typically alternate, although it is possible to have a number of prediction steps followed by one update step and then again further prediction steps. In other words, the update step is typically only performed, when there is a measured sample of the kinematic data.

However, since the simple Kalman filter is typically not able to process non-linearities or can linearize non-linearities, an extended Kalman filter is generally used in these cases. The extended Kalman filter is described in Bar-Shalom, Y., Willett, P. K., Tian, X. (2011). Tracking and Data Fusion: A Handbook of Algorithms. United States: YBS Publishing, pages 17 to 20.

The unscented Kalman filter is described in more detail in Eric A Wan and Rudolph Van Der Merwe. "The unscented Kalman filter for nonlinear estimation". In: Proceedings of the IEEE 2000 Adaptive Systems for Signal Processing, Communications, and Control Symposium (Cat. No. 00EX373). IEEE. 2000, pp. 153-158.

Preferably, each Kalman-type filter unit includes a motion model that models the motion of the main vehicle, and the motion model determines the future kinematic data by keeping at least one of the kinematic variables that define the current kinematic state constant and advancing the remaining kinematic variables by one time step. Preferably, each motion model is selected from a group consisting of a constant velocity model, a constant acceleration model, a constant heading model, a coordinated turn rate model, and a constant turn rate and acceleration model.

The motion model is part of predicting the future kinematic data. In the constant velocity model all velocities are assumed to be constant over one time step. In the constant acceleration model all accelerations are assumed to be constant. These models are very simple and can be calculated very fast.

The constant heading model treats the velocity as a scalar and the heading as constant. The coordinated turn rate model also treats the velocity as a scalar, but instead of the heading, the turn rate is treated as a constant. These models are a bit more complicated than the previous ones but yield better prediction results and hence a better performance of the companion vehicle.

The constant turn rate acceleration model treats the acceleration and the turn rate as constants. It involves the velocity as a scalar and further estimates the position, the velocity and the heading.

Preferably, the prediction unit comprises a plurality of Kalman-type filter units, wherein each Kalman-type filter unit determines the future kinematic data based on the motion model, and the motion models of each pair of Kalman-type filter units are different. Different motion models are suitable for different situations. With this implementation the Kalman-type filters can improve the accuracy of the prediction.

Preferably, the preprocessing unit includes a mixing unit that determines a linear combination of first future kinematic data determined by a first Kalman-type filter unit and second future kinematic data determined by a second Kalman-type filter unit and outputs the linear combination as the input kinematic data. Preferably, coefficients of the linear combination are determined based on a measurement residual value of each Kalman-type filter. With this implementation, the input kinematic data is weighted according to the previous estimate of which motion model is better suited for the current situation. This allows an improvement in accuracy of the prediction.

Preferably, the output of the Kalman-type filter units is merged in a weighted manner to obtain the predicted future kinematic data, and weights for the merging are determined based on a normalized likelihood value of each motion model. The different filters are suited for different situations and the predictions can slightly vary depending on the motion model. By weighting the output with the likelihood of the filter being suitable, the accuracy of the prediction can be increased.

Preferably, the preprocessing unit, the measuring unit, and the prediction unit are part of the main vehicle and the control unit is part of the companion vehicle or part of a ground station, wherein the future kinematic data determined by the prediction unit are transmitted to the companion vehicle or the ground station and the control unit, upon receiving the future kinematic data, controls the companion vehicle in accordance with the generated control signal. The main vehicle typically has better resources than the companion vehicle such that the main computational effort is better performed by the main vehicle and the results are transmitted to the companion vehicle.

Preferably, the companion vehicle or the ground station comprises:

- a companion preprocessing unit determining input companion kinematic data from previously determined companion future kinematic data;
- a companion measuring unit determining current companion kinematic data that are indicative of a current kinematic state of the companion vehicle at a current time step, wherein the current companion kinematic data are determined from sensor data obtained by at least one sensor of the companion vehicle;
- a companion prediction unit receiving the input companion kinematic data and the current companion kinematic data, wherein the companion prediction unit comprises at least one Kalman-type filter unit each Kalman-type filter unit determining future companion kinematic data from the input companion kinematic data and the current companion kinematic data, wherein the future companion kinematic data are indicative of a kinematic state of the companion vehicle at a next time step;

wherein the future companion kinematic data and the future kinematic data are processed by the control unit to generate the control signal and control the companion vehicle in accordance with the control signal. With this the accuracy of control of the companion vehicle can be further improved.

Preferably, the main vehicle is a manned vehicle and is chosen from a group consisting of a land vehicle, a water vehicle, and an aerial vehicle. Preferably, the companion vehicle is an unmanned vehicle and/or a remote controllable vehicle, and the companion vehicle is chosen from a group consisting of a land vehicle, a water vehicle, and an aerial vehicle. Preferably, the main vehicle is a land vehicle and the companion vehicle is an aerial vehicle; or wherein the main vehicle is a water vehicle and the companion vehicle is a water vehicle or an aerial vehicle; or wherein the main vehicle is an aerial vehicle and the companion vehicle is an aerial vehicle.

The invention provides a system of vehicles comprising a main vehicle, at least one companion vehicle and optionally a ground station, wherein the main vehicle, each companion vehicle, and the ground station comprise means that are configured for performing the preferred method.

Preferably, the system includes a plurality of companion vehicles, wherein at least one companion vehicle that is controlled by the actual main vehicle acts as a main vehicle for another companion vehicle.

The invention provides a computer program comprising instructions which, when the program is executed by the preferred system, cause the system to perform the preferred method.

Embodiments of the invention are described in more detail with reference to the accompanying schematic drawings that are listed below

Fig. 1     depicts a first embodiment of a system according to the invention;

Fig. 2     depicts an embodiment of a method according to the invention; and

Fig. 3     depicts a second embodiment of a system according to the invention.

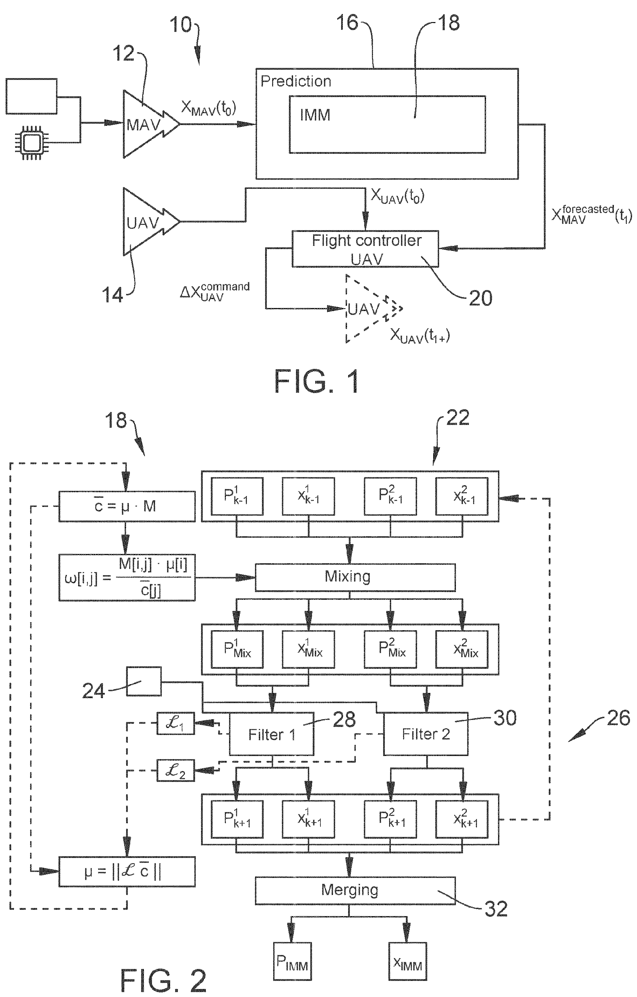

Referring to Fig. 1 a system 10 comprises a main vehicle 12. The main vehicle 12 is preferably a manned vehicle. The main vehicle 12 can be an aerial vehicle, e.g., a firefighting airplane.

The system 10 comprises a companion vehicle 14. The companion vehicle is preferably an unmanned vehicle. The companion vehicle 14 can be an unmanned aerial vehicle, e.g., a camera drone.

The main vehicle 12 and the companion vehicle 14 are equipped with a communication system such that they can communicate with each other.

The main vehicle 12 follows a flight path that is controlled by the pilot and the companion vehicle 14 is given a predetermined position relative to the main vehicle 12 at which the companion vehicle 14 flies ahead, for example. The relative position may be 50 meters to the right and 200 meters ahead, for example.

The system 10 is configured such that the companion vehicle 14 can maintain its predetermined position relative to the main vehicle 12 within an acceptable tolerance.

The main vehicle 12 comprises a main control unit 16. The main control unit 16 controls the flight path of the main vehicle 12 and receives its control signals from the pilot.

The main vehicle 12 comprises a prediction apparatus 18. The prediction apparatus 18 is configured for predicting future kinematic data that describe a future kinematic state of the main vehicle 12. The predicted future kinematic data are transmitted to the companion vehicle 14.

The companion vehicle 14 comprises a control unit 20. The control unit 20 is configured to control the flight path of the companion vehicle 14. The control unit 20 receives the future kinematic data that include information about the future position of the main vehicle 12. The control unit 20 determines at least the future position that the companion vehicle 14 needs to reach such that the predetermined relative position is kept within the tolerance. Based on that, the control unit 20 generates a control signal that adjusts the kinematic parameters of the companion vehicle 14, such as velocity, heading, turn rate or acceleration. The control signal is generated such that the relative position is kept within the tolerance.

Referring to Fig. 2, the main control unit 16 and its function are described in more detail. The main control unit 16 uses an interacting multiple model approach in predicting the future kinematic data of the main vehicle 12. The kinematic data are indicative of a kinematic state of the main vehicle 12 and include a state vector and a covariance matrix. The state vector includes the quantities that are characteristic for the kinematic state, e.g., position, velocity, heading, turn rate and/or acceleration. The covariance matrix is indicative of an uncertainty in the prediction.

The main control unit 16 comprises a preprocessing unit 22, a measuring unit 24, and a prediction unit 26.

The measuring unit 24 is connected to a plurality of sensors that are arranged on the main vehicle 12. The sensors may include a global navigation satellite sensor, that is able to determine a position and/or velocity based on a global satellite navigation system. The sensors may include an inertial measurement unit or magnetometer for determining a heading. The sensors may include a pitot tube.

The prediction unit 26 includes a first Kalman-type filter unit 28 and a second Kalman-type filter unit 30. Each Kalman-type filter unit 28, 30 includes a motion model. Each motion model is generally derived from the known equations of motion for point-like masses, wherein the motion model is typically characterized by the quantities that are assumed to be constant during a time step.

The first Kalman-type filter unit 28 and the second Kalman-type filter unit 30 use different motion models to predict first future kinematic data $x^1_{k+1}$, $P^1_{k+1}$ and second future kinematic data $x^2_{k+1}$, $P^2_{k+1}$. Also the first Kalman-type filter unit 28 may be of a different type than the second Kalman-type filter unit 30. The first Kalman-type filter unit 28 may be configured as an extended Kalman filter, whereas the second Kalman-type filter unit 30 is preferably configured as an unscented Kalman filter.

The first Kalman-type filter unit 28 is preferably equipped with a constant heading motion model. The second Kalman-type filter unit 30 is preferably equipped with any of a coordinated turn motion model and a constant turn rate and acceleration model.

The prediction unit 26 includes a merging unit 32. The merging unit 32 merges the output of the Kalman-type filter units 28, 30 in order to obtain the predicted future kinematic data that is transmitted to the companion vehicle 14.

The method for predicting the future kinematic data is described with reference to Fig. 2.

First, the state vector $X_0$ and the covariance matrix $P_0$ are initialized. The index 0 refers to the time step which is currently k = 0. The state vector $X_0$ includes the initial position $x_0$, $y_0$, the initial velocity $V_0$ as a scalar, the initial heading $\psi_0$, the initial turn rate $\omega_0$ and the initial acceleration $a_0$.

In the following a brief overview of the so called Interacting Multiple Model (IMM) algorithm is given. For further details, reference is made to Bar-Shalom, Y., Willett, P. K., Tian, X. (2011). Tracking and Data Fusion: A Handbook of Algorithms. United States: YBS Publishing. ISBN: 9780964831278. An initial mode probability vector $\mu_0$ is initialized such that the entries sum up to 1 and are all the same value. This value defines which model is mainly used and will change over time.

A transition probability matrix M is initialized as a time-independent parameter. It represents the probabilities with which the dominant model changes within a time step. If for example one uses one model for straight lines and one for curves, the matrix M describes the probability that a motion model remains active or changes. The main diagonal entries give the probability that the currently used model is also the best for the next time step, whereas the other entries give the probability that another model is better in the next step. Typically the entries in the main diagonal are larger than 0.6 and the remaining entries in a row or column are the same and sum up to 1 together with the respective main diagonal element.

The preprocessing unit 22 determines a mixing probability matrix $w^{i,j}$, which is used to mix the previously determined future kinematic data $P^1_{k-1}$, $x^1_{k-1}$, and $P^2_{k-1}$, $x^2_{k-1}$. The mixing probability matrix $w^{i,j}$ is calculated as

$$w^{i,j} = \frac{M^{i,j} \mu^i_{k-1}}{\bar{c}^j} \text{ with } \bar{c}^j = \mu_{k-1} \cdot M^j$$

where i and j designates the elements of the matrix.

The preprocessing unit 22 determines a mixed state vector $X^i_{mix}$ and a mixed covariance matrix $P^i_{mix}$ according to

$$X^i_{Mix} = \sum_j X^j_{k-1} w^{i,j}$$

$$P^i_{Mix} = \sum_j \left[ P^j_{k-1} + \left( X^i_{Mix} - X^j_{k-1} \right) \left( X^i_{Mix} - X^j_{k-1} \right)^T \right] w^{i,j}$$

.

The mixed quantities are fed to the first and second Kalman-type filter units 28, 30, respectively, and the first and second Kalman-type filter units 28, 30 receive the measured kinematic data that were obtained by the measuring unit 24 from the sensors and determine the future kinematic data $P^1_{k+1}$, $x^1_{k+1}$, and $P^2_{k+1}$, $x^2_{k+1}$ of the next time step using the extended Kalman filter and unscented Kalman filter, respectively, where P designates the covariance matrix and x designates the state vector.

For each Kalman-type filter unit 28, 30 the likelihood is calculated based on the respective measurement residual $Z_k$ and residual covariance $S_k$ according to

$$\mathcal{L} = \mathcal{N}(Z_k; 0, S_k)$$

The likelihood L is calculated by computing the probability density function out of the measurement residual of each Kalman-type filter unit 28, 30. Assuming that the mean of the error is 0 and the matrix $S_k$ can be used as a covariance matrix, the resemblance between each Kalman-type filter unit 28, 30 and the measurement can be calculated.

Then the mode probability $\mu$ is updated by normalizing each model:

$$\mu^i = \frac{c^i}{\sum c} \text{ with } c^i = \mathcal{L}^i \bar{c}$$

.

The merged new state vectors and covariance matrices are then determined according to

$$X_{IMM} = \sum_i X^i_{k+1} \mu^i$$

$$P_{IMM} = \sum_i \left[ P^i_{k+1} + \left( X_{IMM} - X^i_{k+1} \right) \left( X_{IMM} - X^i_{k+1} \right)^T \right] \mu^i$$

where $P_{IMM}$ and $X_{IMM}$ designate the final prediction of the future kinematic data that are sent to the companion vehicle 14.

The whole process is repeated with the $P^1_{k+1}$, $x^1_{k+1}$, and $P^2_{k+1}$, $x^2_{k+1}$ used as the previously predicted future kinematic data.

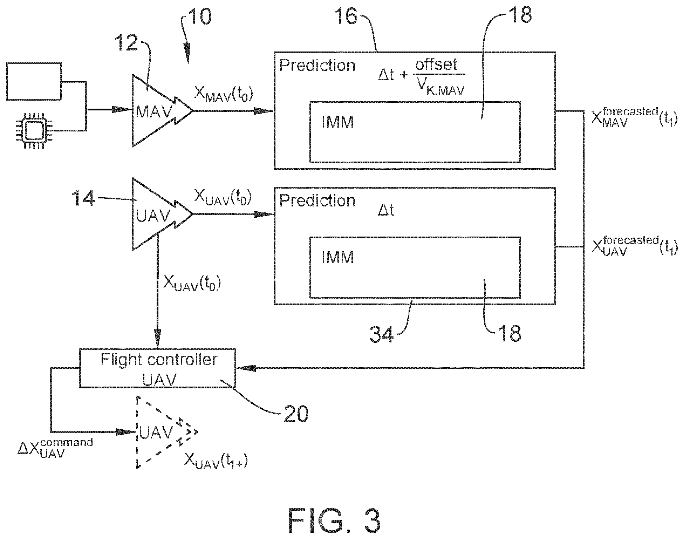

Referring to Fig. 3 another embodiment of the system 10 is described insofar as it differs from the first embodiment. The system 10 has a companion vehicle 14 that has a companion control unit 34. The companion control unit 34 has basically the same structure as the main control unit 16 and performs its own prediction of kinematic data for the companion vehicle 14. In other words, the companion control unit 34 includes a companion preprocessing unit, a companion measuring unit, and a companion prediction unit, and the companion measuring unit is connected to the sensors of the companion vehicle 14. The control unit 20 is configured to determine the control signal for the companion vehicle 14 based on the predicted future kinematic data of the main vehicle 12 and of the companion vehicle 14 such that the relative position between the two is maintained within a predetermined tolerance.

It should be noted that with the described ideas, it is possible to concatenate a series of companion vehicles 14 ahead of the previous ones. In other words, one of the companion vehicles 14 acts as the main vehicle 12 for the next companion vehicle 14 in the series. With this, a swarm of companion vehicles 14 can be coordinated such that not all of them fly relative to the main vehicle 12.

**List of reference signs:**

10   system
12   main vehicle
14   companion vehicle
16   main control unit
18   prediction apparatus
20   control unit
22   preprocessing unit
24   measuring unit
26   prediction unit
28   first Kalman-type filter unit
30   second Kalman-type filter unit
32   merging unit
34   companion control unit

**Claims**

1. A computer-implemented method for generating a control signal for controlling at least one companion vehicle (14) of a main vehicle (12), the method comprising:

   - a preprocessing unit (22) determining input kinematic data from previously determined future kinematic data;
   - a measuring unit (24) determining current kinematic data that are indicative of a current kinematic state of the main vehicle (12) at a current time step, wherein the current kinematic data are determined from sensor data obtained by at least one sensor of the main vehicle (12);
   - a prediction unit (26) receiving the input kinematic data and the current kinematic data, wherein the prediction unit comprises at least one Kalman-type filter unit (28, 30) each Kalman-type filter unit (28, 30) determining future kinematic data from the input kinematic data and the current kinematic data, wherein the future kinematic data are indicative of a kinematic state of the main vehicle (12) at a next time step;
   - a control unit (20) generating a control signal based on the predicted future kinematic data, wherein the control signal is configured to cause each companion vehicle (14) to move in a manner that maintains a predetermined position relative to the main vehicle (12) within a predetermined tolerance.

2. The method according to claim 1, wherein the Kalman-type filter unit (28, 30) is selected from a group consisting of a Kalman filter unit, an extended Kalman filter unit, and an unscented Kalman filter unit.

3. The method according to any of the preceding claims, wherein each Kalman-type filter unit (28, 30) includes a motion model that models the motion of the main vehicle (12), and the motion model determines the future kinematic data by keeping at least one of the kinematic variables that define the current kinematic state constant and advancing the remaining kinematic variables by one time step.

4. The method according to claim 3, wherein each motion model is selected from a group consisting of a constant velocity model, a constant acceleration model, a constant heading model, a coordinated turn rate model, and a constant turn rate and acceleration model.

5. The method according to claim 3 or 4, wherein the prediction unit comprises a plurality of Kalman-type filter units (28, 30), wherein each Kalman-type filter unit determines the future kinematic data based on the motion model, and the motion models of each pair of Kalman-type filter units (28, 30) are different.

6. The method according to claim 5, wherein the preprocessing unit includes a mixing unit that determines a linear combination of first future kinematic data determined by a first Kalman-type filter unit (28) and second future kinematic data determined by a second Kalman-type filter unit (30) and outputs the linear combination as the input kinematic data.

7. The method according to claim 6, wherein coefficients of the linear combination are determined based on a measurement residual value of each Kalman-type filter.

8. The method according to any of the claims 5 to 7, wherein the output of the Kalman-type filter units (28, 30) is merged in a weighted manner to obtain the predicted future kinematic data, and weights for the merging are determined based on a normalized likelihood value of each motion model.

9. The method according to any of the preceding claims, wherein the preprocessing unit (22), the measuring unit (24), and the prediction unit (26) are part of the main vehicle (12) and the control unit (20) is part of the companion vehicle (14) or part of a ground station, wherein the future kinematic data determined by the prediction unit (26) are transmitted to the companion vehicle (14) or the ground station and the control unit (20), upon receiving the future kinematic data, controls the companion vehicle (14) in accordance with the generated control signal.

10. The method according to claim 9, wherein the companion vehicle (14) or the ground station comprises:

   - a companion preprocessing unit determining input companion kinematic data from previously determined companion future kinematic data;
   - a companion measuring unit determining current companion kinematic data that are indicative of a current kinematic state of the companion vehicle (14) at a current time step, wherein the current companion kinematic data are determined from sensor data obtained by at least one sensor of the companion vehicle (14);
   - a companion prediction unit receiving the input companion kinematic data and the current companion kinematic data, wherein the companion prediction unit comprises at least one Kalman-type filter unit (28, 30) each Kalman-type filter unit (28, 30) determining future companion kinematic data from the input companion kinematic data and the current companion kinematic data, wherein the future companion kinematic data are indicative of a kinematic state of the companion vehicle (14) at a next time step;

   wherein the future companion kinematic data and the future kinematic data are processed by the control unit (20) to generate the control signal and control the companion vehicle (14) in accordance with the control signal.

11. The method according to any of the preceding claims, wherein the main vehicle (12) is a manned vehicle and is chosen from a group consisting of a land vehicle, a water vehicle, and an aerial vehicle.

12. The method according to any of the preceding claims, wherein the companion vehicle (14) is an unmanned vehicle and/or a remote controllable vehicle, and the companion vehicle (14) is chosen from a group consisting of a land vehicle, a water vehicle, and an aerial vehicle.

13. The method according to claims 11 and 12, wherein the main vehicle (12) is a land vehicle and the companion vehicle (14) is an aerial vehicle; or wherein the main vehicle (12) is a water vehicle and the companion vehicle (14) is a water vehicle or an aerial vehicle; or wherein the main vehicle (12) is an aerial vehicle and the companion vehicle (14) is an aerial vehicle.

14. A system of vehicles comprising a main vehicle (12), at least one companion vehicle (14) and optionally a ground station, wherein the main vehicle (12), each companion vehicle (14), and the ground station comprise means that are configured for performing the method according to any of the preceding claims.

15. A computer program comprising instructions which, when the program is executed by the system according to claim 14, cause the system to perform the method according to any of the claims 1 to 13.

**Patentansprüche**

1. Computerimplementiertes Verfahren zum Erzeugen eines Steuersignals zum Steuern mindestens eines Begleitfahrzeugs (14) eines Hauptfahrzeugs (12), wobei das Verfahren Folgendes umfasst:

   - eine Vorverarbeitungseinheit (22), die eingegebene kinematische Daten aus zuvor bestimmten zukünftigen kinematischen Daten bestimmt;
   - eine Messeinheit (24), die aktuelle kinematische Daten, die einen aktuellen kinematischen Zustand des Hauptfahrzeugs (12) zu einem aktuellen Zeitschritt angeben, bestimmt, wobei die aktuellen kinematischen Daten aus durch mindestens einen Sensor des Hauptfahrzeugs (12) erhaltenen Sensordaten bestimmt werden;
   - eine Vorhersageeinheit (26), die die eingegebenen kinematischen Daten und die aktuellen kinematischen Daten empfängt, wobei die Vorhersageeinheit mindestens eine Kalman-Typ-Filtereinheit (28, 30) umfasst, wobei jede Kalman-Typ-Filtereinheit (28, 30) zukünftige kinematische Daten aus den eingegebenen kinematischen Daten und den aktuellen kinematischen Daten bestimmt, wobei die zukünftigen kinematischen Daten einen kinematischen Zustand des Hauptfahrzeugs (12) zu einem nächsten Zeitschritt angeben;
   - eine Steuereinheit (20), die ein Steuersignal basierend auf den vorhergesagten zukünftigen kinematischen Daten erzeugt, wobei das Steuersignal dazu konfiguriert ist, zu bewirken, dass sich jedes Begleitfahrzeug (14) derart bewegt, dass eine vorbestimmte Position relativ zu dem Hauptfahrzeug (12) innerhalb einer vorbestimmten Toleranz beibehalten wird.

2. Verfahren nach Anspruch 1, wobei die Kalman-Typ-Filtereinheit (28, 30) aus einer Gruppe ausgewählt wird, die aus einer Kalman-Filtereinheit, einer Extended-Kalman-Filtereinheit und einer Unscented-Kalman-Filtereinheit besteht.

3. Verfahren nach einem der vorhergehenden Ansprüche, wobei jede Kalman-Typ-Filtereinheit (28, 30) ein Bewegungsmodell beinhaltet, das die Bewegung des Hauptfahrzeugs (12) modelliert, und das Bewegungsmodell die zukünftigen kinematischen Daten bestimmt, indem mindestens eine der kinematischen Variablen, die den aktuellen kinematischen Zustand definieren, konstant gehalten wird und die übrigen kinematischen Variablen um einen Zeitschritt fortgeschrieben werden.

4. Verfahren nach Anspruch 3, wobei jedes Bewegungsmodell aus einer Gruppe ausgewählt wird, die aus einem Modell mit konstanter Geschwindigkeit, einem Modell mit konstanter Beschleunigung, einem Modell mit konstantem Steuerkurs, einem Modell mit koordinierter Kurvenrate und einem Modell mit konstanter Kurvenrate und Beschleunigung besteht.

5. Verfahren nach Anspruch 3 oder 4, wobei die Vorhersageeinheit mehrere Kalman-Typ-Filtereinheiten (28, 30) umfasst, wobei jede Kalman-Typ-Filtereinheit die zukünftigen kinematischen Daten basierend auf dem Bewegungsmodell bestimmt und die Bewegungsmodelle jedes Paars Kalman-Typ-Filtereinheiten (28, 30) unterschiedlich sind.

6. Verfahren nach Anspruch 5, wobei die Vorverarbeitungseinheit eine Mischeinheit beinhaltet, die eine lineare Kombination erster zukünftiger kinematischer Daten, die durch eine erste Kalman-Typ-Filtereinheit (28) bestimmt werden, und zweiter zukünftiger kinematischer Daten, die durch eine zweite Kalman-Typ-Filtereinheit (30) bestimmt werden, bestimmt und die lineare Kombination als die eingegebenen kinematischen Daten ausgibt.

7. Verfahren nach Anspruch 6, wobei Koeffizienten der linearen Kombination basierend auf einem Restmesswert jedes Kalman-Typ-Filters bestimmt werden.

8. Verfahren nach einem der Ansprüche 5 bis 7, wobei die Ausgabe der Kalman-Typ-Filtereinheiten (28, 30) gewichtet zusammengeführt wird, um die vorhergesagten zukünftigen kinematischen Daten zu erhalten, und Gewichte für das Zusammenführen basierend auf einem normierten Wahrscheinlichkeitswert jedes Bewegungsmodells bestimmt werden.

9. Verfahren nach einem der vorhergehenden Ansprüche, wobei die Vorverarbeitungseinheit (22), die Messeinheit (24) und die Vorhersageeinheit (26) Teil des Hauptfahrzeugs (12) sind und die Steuereinheit (20) Teil des Begleitfahrzeugs (14) oder Teil einer Bodenstation ist, wobei die durch die Vorhersageeinheit (26) bestimmten zukünftigen kinematischen Daten an das Begleitfahrzeug (14) oder die Bodenstation übertragen werden und die Steuereinheit (20) nach dem Empfangen der zukünftigen kinematischen Daten das Begleitfahrzeug (14) gemäß dem erzeugten Steuersignal steuert.

10. Verfahren nach Anspruch 9, wobei das Begleitfahrzeug (14) oder die Bodenstation Folgendes umfasst:

- eine Begleitvorverarbeitungseinheit, die eingegebene kinematische Begleitdaten aus zuvor bestimmten zukünftigen kinematischen Begleitdaten bestimmt;
- eine Begleitmesseinheit, die aktuelle kinematische Begleitdaten, die einen aktuellen kinematischen Zustand des Begleitfahrzeugs (14) zu einem aktuellen Zeitschritt angeben, bestimmt, wobei die aktuellen kinematischen Begleitdaten aus durch mindestens einen Sensor des Begleitfahrzeugs (14) erhaltenen Sensordaten bestimmt werden;
- eine Begleitvorhersageeinheit, die die eingegebenen kinematischen Begleitdaten und die aktuellen kinematischen Begleitdaten empfängt, wobei die Begleitvorhersageeinheit mindestens eine Kalman-Typ-Filtereinheit (28, 30) umfasst, wobei jede Kalman-Typ-Filtereinheit (28, 30) zukünftige kinematische Begleitdaten aus den eingegebenen kinematischen Begleitdaten und den aktuellen kinematischen Begleitdaten bestimmt, wobei die zukünftigen kinematischen Begleitdaten einen kinematischen Zustand des Begleitfahrzeugs (14) zu einem nächsten Zeitschritt angeben;

wobei die zukünftigen kinematischen Begleitdaten und die zukünftigen kinematischen Daten durch die Steuereinheit (20) verarbeitet werden, um das Steuersignal zu erzeugen und das Begleitfahrzeug (14) gemäß dem Steuersignal zu steuern.

11. Verfahren nach einem der vorhergehenden Ansprüche, wobei das Hauptfahrzeug (12) ein bemanntes Fahrzeug ist und aus einer Gruppe ausgewählt wird, die aus einem Landfahrzeug, einem Wasserfahrzeug und einem Luftfahrzeug besteht.

12. Verfahren nach einem der vorhergehenden Ansprüche, wobei das Begleitfahrzeug (14) ein unbemanntes Fahrzeug und/oder ein fernsteuerbares Fahrzeug ist und das Begleitfahrzeug (14) aus einer Gruppe ausgewählt wird, die aus einem Landfahrzeug, einem Wasserfahrzeug und einem Luftfahrzeug besteht.

13. Verfahren nach den Ansprüchen 11 und 12, wobei das Hauptfahrzeug (12) ein Landfahrzeug ist und das Begleitfahrzeug (14) ein Luftfahrzeug ist; oder wobei das Hauptfahrzeug (12) ein Wasserfahrzeug ist und das Begleitfahrzeug (14) ein Wasserfahrzeug oder ein Luftfahrzeug ist; oder wobei das Hauptfahrzeug (12) ein Luftfahrzeug ist und das Begleitfahrzeug (14) ein Luftfahrzeug ist.

14. System von Fahrzeugen, das ein Hauptfahrzeug (12), mindestens ein Begleitfahrzeug (14) und optional eine Bodenstation umfasst, wobei das Hauptfahrzeug (12), jedes Begleitfahrzeug (14) und die Bodenstation Mittel umfassen, die zum Durchführen des Verfahrens nach einem der vorhergehenden Ansprüche konfiguriert sind.

15. Computerprogramm, das Anweisungen umfasst, die, wenn das Programm durch das System nach Anspruch 14 ausgeführt wird, bewirken, dass das System das Verfahren nach einem der Ansprüche 1 bis 13 durchführt.

**Revendications**

1. Procédé mis en œuvre par ordinateur pour générer un signal de commande afin de commander au moins un véhicule compagnon (14) d'un véhicule principal (12), le procédé comprenant les étapes suivantes :

- une unité de prétraitement (22) déterminant des données cinématiques d'entrée à partir de données cinématiques futures préalablement déterminées ;
- une unité de mesure (24) déterminant des données cinématiques courantes représentatives d'un état cinématique courant du véhicule principal (12) à un pas de temps courant, où les données cinématiques courantes sont déterminées à partir de données de capteur obtenues par au moins un capteur du véhicule principal (12) ;
- une unité de prédiction (26) recevant les données cinématiques d'entrée et les données cinématiques courantes, où l'unité de prédiction comprend au moins une unité de filtre de type Kalman (28, 30), chaque unité de filtre de type Kalman (28, 30) déterminant des données cinématiques futures à partir des données cinématiques d'entrée et des données cinématiques courantes, où les données cinématiques futures sont indicatives d'un état cinématique du véhicule principal (12) à un pas de temps suivant ;

- une unité de commande (20) générant un signal de commande à partir des données cinématiques futures prédites, où le signal de commande est configuré pour faire se déplacer chaque véhicule compagnon (14) de manière à maintenir une position prédéterminée par rapport au véhicule principal (12) dans les limites d'une tolérance prédéterminée.

2. Procédé selon la revendication 1, dans lequel l'unité de filtre de type Kalman (28, 30) est sélectionnée dans un groupe constitué d'une unité de filtre Kalman, d'une unité de filtre Kalman étendue et d'une unité de filtre Kalman de type unscented.

3. Procédé selon l'une quelconque des revendications précédentes, dans lequel chaque unité de filtre Kalman (28, 30) comprend un modèle de mouvement qui modélise le mouvement du véhicule principal (12), et le modèle de mouvement détermine les données cinématiques futures en maintenant constante au moins une des variables cinématiques qui définissent l'état cinématique courant et en faisant avancer les variables cinématiques restantes d'un pas de temps.

4. Procédé selon la revendication 3, dans lequel chaque modèle de mouvement est sélectionné dans un groupe constitué d'un modèle à vitesse constante, d'un modèle à accélération constante, d'un modèle à cap constant, d'un modèle à vitesse de virage coordonnée, et d'un modèle à vitesse de virage et accélération constantes.

5. Procédé selon la revendication 3 ou la revendication 4, dans lequel l'unité de prédiction comprend une pluralité d'unités de filtre Kalman (28, 30), où chaque unité de filtre Kalman détermine les données cinématiques futures sur la base du modèle de mouvement, et les modèles de mouvement de chaque paire d'unités de filtre Kalman (28, 30) sont différents.

6. Procédé selon la revendication 5, dans lequel l'unité de prétraitement comprend une unité de mélange qui détermine une combinaison linéaire de premières données cinématiques futures déterminées par une première unité de filtre Kalman (28) et de deuxièmes données cinématiques futures déterminées par une deuxième unité de filtre Kalman (30), et délivre en sortie la combinaison linéaire en tant que données cinématiques d'entrée.

7. Procédé selon la revendication 6, dans lequel des coefficients de la combinaison linéaire sont déterminés sur la base d'une valeur résiduelle de mesure de chaque filtre Kalman.

8. Procédé selon l'une quelconque des revendications 5 à 7, dans lequel la sortie des unités de filtre Kalman (28, 30) est fusionnée de manière pondérée pour obtenir les données cinématiques futures prédites, et les poids pour la fusion sont déterminés sur la base d'une valeur de probabilité normalisée de chaque modèle de mouvement.

9. Procédé selon l'une quelconque des revendications précédentes, dans lequel l'unité de prétraitement (22), l'unité de mesure (24) et l'unité de prédiction (26) font partie du véhicule principal (12), et l'unité de commande (20) fait partie du véhicule compagnon (14) ou d'une station au sol, où les données cinématiques futures déterminées par l'unité de prédiction (26) sont transmises au véhicule compagnon (14) ou à la station au sol, et l'unité de commande (20), lors de la réception des données cinématiques futures, commande le véhicule compagnon (14) en fonction du signal de commande généré.

10. Procédé selon la revendication 9, dans lequel le véhicule compagnon (14) ou la station au sol comprend :

- une unité de prétraitement compagnon déterminant des données cinématiques d'entrée du compagnon à partir de données cinématiques futures du compagnon précédemment déterminées ;
- une unité de mesure de compagnon déterminant les données cinématiques courantes du compagnon qui sont indicatives d'un état cinématique courant du véhicule compagnon (14) à un pas de temps courant, où les données cinématiques courantes du compagnon sont déterminées à partir de données de capteur obtenues par au moins un capteur du véhicule compagnon (14) ;
- une unité de prédiction du compagnon recevant les données cinématiques d'entrée du compagnon et les données cinématiques courantes du compagnon, où l'unité de prédiction du compagnon comprend au moins une unité de filtre Kalman (28, 30) chaque unité de filtre Kalman (28, 30) déterminant des données cinématiques futures du compagnon à partir des données cinématiques d'entrée du compagnon et des données cinématiques courantes du compagnon, où les données cinématiques futures du compagnon sont indicatives d'un état cinématique du véhicule compagnon (14) à un pas de temps suivant ;

où les données cinématiques futures du compagnon et les données cinématiques futures sont traitées par l'unité de commande (20) pour générer le signal de commande et commander le véhicule compagnon (14) en fonction du signal de commande.

11. Procédé selon l'une quelconque des revendications précédentes, dans lequel le véhicule principal (12) est un véhicule habité et est choisi dans un groupe constitué d'un véhicule terrestre, d'un véhicule nautique et d'un véhicule aérien.

12. Procédé selon l'une quelconque des revendications précédentes, dans lequel le véhicule compagnon (14) est un véhicule sans pilote et/ou un véhicule télécommandable, et le véhicule compagnon (14) est choisi dans un groupe constitué d'un véhicule terrestre, d'un véhicule nautique et d'un véhicule aérien.

13. Procédé selon les revendications 11 et 12, dans lequel le véhicule principal (12) est un véhicule terrestre et le véhicule compagnon (14) est un véhicule aérien ; ou dans lequel le véhicule principal (12) est un véhicule aquatique et le véhicule compagnon (14) est un véhicule aquatique ou un véhicule aérien ; ou dans lequel le véhicule principal (12) est un véhicule aérien et le véhicule compagnon (14) est un véhicule aérien.

14. Système de véhicules comprenant un véhicule principal (12), au moins un véhicule compagnon (14) et éventuellement une station au sol, où le véhicule principal (12), chaque véhicule compagnon (14) et la station au sol comprennent des moyens qui sont configurés pour mettre en œuvre le procédé selon l'une quelconque des revendications précédentes.

15. Programme d'ordinateur comprenant des instructions qui, lorsque le programme est exécuté par le système selon la revendication 14, amènent le système à exécuter le procédé selon l'une quelconque des revendications 1 à 13.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101774313 B1
- US 20110224844 A1
- US 20150158513 A1
- US 10558209 B1
- CN 111885504 A
- US 2019049968 A1

### Non-patent literature cited in the description

- Application of Interacting Multiple Model for Future State Prediction of Small Unmanned Aerial Systems. **WELLS JAMES Z et al.** 2021 AMERICAN CONTROL CONFERENCE (ACC). AMERICAN AUTOMATIC CONTROL COUNCIL, 25 May 2021, 3755-3760
- **BAR-SHALOM, Y.** ; **WILLETT, P. K** ; **TIAN, X.** Tracking and Data Fusion: A Handbook of Algorithms. United States: YBS Publishing, 2011, 17-20
- The unscented Kalman filter for nonlinear estimation. **ERIC A WAN** ; **RUDOLPH VAN DER MERWE.** Proceedings of the IEEE 2000 Adaptive Systems for Signal Processing, Communications, and Control Symposium. IEEE., 2000, 153-158
- **BAR-SHALOM, Y** ; **WILLETT, P. K** ; **TIAN, X**. Tracking and Data Fusion: A Handbook of Algorithms. United States: YBS Publishing, 2011